(19) Europäisches Patentamt
European Patent Office
Office européen des brevets

(11) **EP 3 226 028 A1**

(12) **EUROPÄISCHE PATENTANMELDUNG**

(43) Veröffentlichungstag:
04.10.2017 Patentblatt 2017/40

(51) Int Cl.:
*G01S 15/93* (2006.01)      *G01S 7/52* (2006.01)
*G01S 15/87* (2006.01)      *G01S 15/10* (2006.01)
*G01S 15/88* (2006.01)      *G01S 15/46* (2006.01)

(21) Anmeldenummer: 17157563.2

(22) Anmeldetag: 23.02.2017

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA MD

(30) Priorität: 21.03.2016 DE 102016105153

(71) Anmelder: **Valeo Schalter und Sensoren GmbH 74321 Bietigheim-Bissingen (DE)**

(72) Erfinder:
• **WOLLNY, Stefan**
  **74321 Bietigheim-Bissingen (DE)**
• **LAYEVSKI, Eugen**
  **74321 Bietigheim-Bissingen (DE)**
• **JUNG, Thomas**
  **74321 Bietigheim-Bissingen (DE)**
• **HAMM, Wolfgang**
  **74321 Bietigheim-Bissingen (DE)**

(54) **VERFAHREN ZUM BETREIBEN EINES ULTRASCHALLSENSORS EINES KRAFTFAHRZEUGS MIT BESTIMMUNG DER LUFTFEUCHTIGKEIT, FAHRERASSISTENZSYSTEM SOWIE KRAFTFAHRZEUG**

(57) Die Erfindung betrifft ein Verfahren zum Betreiben eines Ultraschallsensors (4) eines Kraftfahrzeugs (1), mit den Schritten: Aussenden eines ersten Ultraschallsignals mit einer ersten Frequenz und eines zweiten Ultraschallsignals mit einer zweiten Frequenz, Bestimmen einer ersten Amplitude des von einem Objekt (8) in einer Umgebung (7) des Kraftfahrzeugs (1) reflektierten ersten Ultraschallsignals und einer zweiten Amplitude des von dem Objekt reflektierten zweiten Ultraschallsignals, Bestimmen eines ersten Amplitudenverhältnisses, welches ein Verhältnis der ersten Amplitude und der zweiten Amplitude beschreibt, Bestimmen eines ersten Luftschalldämpfungsverhältnisses (L1/L2) des ersten und des zweiten Ultraschallsignals anhand des ersten Amplitudenverhältnisses und Bestimmen einer Luftfeuchtigkeit (φ) in der Umgebung (7) des Kraftfahrzeugs (1) anhand des ersten Luftschalldämpfungsverhältnisses (L1/L2) und einer ersten Zuordnungsvorschrift, welche das erste Luftschalldämpfungsverhältnis (L1/L2) in Abhängigkeit von der Luftfeuchtigkeit (φ) beschreibt.

Fig.4

EP 3 226 028 A1

**Beschreibung**

Die vorliegende Erfindung betrifft ein Verfahren zum Betreiben eines Ultraschallsensors eines Kraftfahrzeugs. Darüber hinaus betrifft die vorliegende Erfindung ein Fahrerassistenzsystem für ein Kraftfahrzeug. Schließlich betrifft die vorliegende Erfindung ein Kraftfahrzeug mit einem derartigen Fahrerassistenzsystem.

Das Interesse richtet sich vorliegend auf Ultraschallsensoren für Kraftfahrzeuge. Derartige Ultraschallsensoren werden in vielen Kraftfahrzeugen, insbesondere in Personenkraftwagen, eingesetzt, um Objekte bzw. Hindernisse in der Umgebung des Kraftfahrzeugs zu erfassen. Insbesondere dienen die Ultraschallsensoren dazu, einen Abstand zwischen dem Kraftfahrzeug und dem Objekt zu bestimmen. Diese Abstandsinformationen können von dem Fahrer des Kraftfahrzeugs genutzt werden, um das Kraftfahrzeug beispielsweise besser einparken zu können. Die Ultraschallsensoren können auch Teil eines Fahrerassistenzsystems sein, welches den Fahrer beim Einparken unterstützt. Beispielsweise kann das Kraftfahrzeug mit Hilfe des Fahrerassistenzsystems autonom in eine Parklücke eingeparkt werden.

Zum Bestimmen des Abstands zwischen dem Kraftfahrzeug und dem Objekt wird mit dem Ultraschallsensor ein Ultraschallsignal ausgesendet. Zudem wird das von dem Objekt reflektierte Ultraschallsignal wieder empfangen. Anhand der Laufzeit zwischen dem Aussenden des Ultraschallsignals und dem Empfangen des von dem Objekt reflektierten Ultraschallsignals kann dann der Abstand ermittelt werden. Dabei sind die Abstandsmessungen, die mit Ultraschallsensoren durchgeführt werden, abhängig von den Umgebungsbedingungen. Ein bedeutender Faktor ist dabei die Luftschalldämpfung des Ultraschallsignals, die wiederum von der Temperatur und der Luftfeuchtigkeit in der Umgebung des Kraftfahrzeugs abhängt. Auch der Luftdruck in der Umgebung des Kraftfahrzeugs wirkt sich auf die Messung mit dem Ultraschallsensor aus. Die Luftschalldämpfung kann je nach Umgebungstemperatur variieren. Dies bedeutet also, dass sich die Luftschalldämpfung in Abhängigkeit von der Temperatur um mehr als den Faktor 10 unterscheiden kann. Somit kann sich die Luftschalldämpfung deutlich auf den Betrieb der Ultraschallsensoren auswirken.

Hierzu beschreibt die DE 10 2008 054 047 A1 ein Verfahren zur Verbesserung der Messsicherheit von Ultraschallsystemen. Hierbei werden die von einem zu erfassenden Objekt reflektierten Ultraschallsignale in einem Steuergerät unter Berücksichtigung der Temperatur des schallübertragenden Mediums ausgewertet. Zusätzlich zur Temperatur kann auch die Luftfeuchte im schallübertragenden Medium erfasst und im Steuergerät zur Kompensation der Signalschwächung bei dem Ultraschallsystem herangezogen werden. Dabei kann das Steuergerät über geeignete Datenleitungen mit den Ultraschallsensoren und Sensoren für die Temperatur und die Luftfeuchte verbunden sein.

Es ist Aufgabe der vorliegenden Erfindung, eine Lösung aufzuzeigen, wie ein Ultraschallsensor für ein Kraftfahrzeug in Abhängigkeit von dem Umgebungsbedingungen auf einfache Weise zuverlässiger betrieben werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

In einer Ausführungsform eines erfindungsgemäßen Verfahrens zum Betreiben eines Ultraschallsensors eines Kraftfahrzeugs werden bevorzugt ein erstes Ultraschallsignals mit einer ersten Frequenz und ein zweites Ultraschallsignal mit einer zweiten Frequenz ausgesendet. Zudem werden bevorzugt eine erste Amplitude des von einem Objekt in einer Umgebung des Kraftfahrzeugs reflektierten ersten Ultraschallsignals und eine zweiten Amplitude des von dem Objekt reflektierten zweiten Ultraschallsignals bestimmt. Des Weiteren wird bevorzugt ein erstes Amplitudenverhältnis, welches ein Verhältnis der ersten und der zweiten Amplitude beschreibt, bestimmt. Ferner wird insbesondere ein erstes Luftschalldämpfungsverhältnis des ersten und des zweiten Ultraschallsignals anhand des ersten Amplitudenverhältnisses bestimmt. Schließlich wird bevorzugt die Luftfeuchtigkeit in der Umgebung des Kraftfahrzeugs anhand des ersten Luftschalldämpfungsverhältnisses und einer ersten Zuordnungsvorschrift, welche das erste Luftschalldämpfungsverhältnis in Abhängigkeit von der Luftfeuchtigkeit beschreibt, bestimmt.

Ein erfindungsgemäßes Verfahren zum Betreiben eines Ultraschallsensors eines Kraftfahrzeugs umfasst die Schritte: Aussenden eines ersten Ultraschallsignals mit einer ersten Frequenz und eines zweiten Ultraschallsignals mit einer zweiten Frequenz, Bestimmen einer ersten Amplitude des von einem Objekt in einer Umgebung des Kraftfahrzeugs reflektierten ersten Ultraschallsignals und einer zweiten Amplitude des von dem Objekt reflektierten zweiten Ultraschallsignals, Bestimmen eines ersten Amplitudenverhältnisses, welches ein Verhältnis der ersten und der zweiten Amplitude beschreibt, Bestimmen eines ersten Luftschalldämpfungsverhältnisses des ersten und des zweiten Ultraschallsignals anhand des ersten Amplitudenverhältnisses und Bestimmen der Luftfeuchtigkeit in der Umgebung des Kraftfahrzeugs anhand des ersten Luftschalldämpfungsverhältnisses und einer ersten Zuordnungsvorschrift, welche das erste Luftschalldämpfungsverhältnis in Abhängigkeit von der Luftfeuchtigkeit beschreibt.

Das Verfahren kann mit einem Ultraschallsensor eines Kraftfahrzeugs durchgeführt werden. Es kann auch vorgesehen sein, dass das Verfahren mit mehreren Ultraschallsensoren des Kraftfahrzeugs durchgeführt wird. Ein solcher Ultraschallsensor kann beispielsweise an einem Stoßfänger des Kraftfahrzeugs angeordnet sein. Dabei kann der Ultraschallsensor in einer entsprechenden Öffnung des Stoßfängers oder verdeckt hinter dem Stoßfänger angeordnet sein. Der Ultraschallsensor sendet das erste Ultraschallsignal aus. Der Ultraschallsensor kann beispielsweise eine Membran aufweisen, die topfförmig ausgebildet ist und aus Aluminium gebildet ist. Diese Membran bzw. ein Membranboden der Membran kann mit einem Wandlerelement, beispielsweise einem piezoelektrischen Element, zum Aussenden des ersten Ultraschallsignals zu mechanischen Schwingungen angeregt werden. Zudem wird mit dem Ultraschallsensor ein zweites Ultraschallsignal ausgesendet, welches eine zweite Frequenz aufweist, die sich von der ersten Frequenz unterscheidet. Zum Aussenden des zweiten Ultraschallsignals kann die Membran mit Hilfe des Wandlerelements mit einer verschiedenen Frequenz angeregt werden. Darüber hinaus wird das erste von dem Objekt reflektierte Ultraschallsignal und das zweite von dem Objekt reflektierte Ultraschallsignal mit Hilfe des Ultraschallsensors empfangen. Zum Empfangen der Ultraschallsignale kann beispielsweise eine Schwingung der Membran mit Hilfe des Wandlerelements erfasst werden, die sich dadurch ausbildet, dass die jeweiligen Ultraschallsignale auf die Membran auftreffen. Dabei kann es vorgesehen sein, dass zunächst das erste Ultraschallsignal ausgesendet wird, dann das reflektierte erste Ultraschallsignal empfangen wird, anschließend das zweite Ultraschallsignal ausgesendet wird und anschließend daran das zweite reflektierte Ultraschallsignal empfangen wird. Darüber hinaus werden die erste Amplitude des ersten reflektierten Ultraschallsignals und die zweite Amplitude des zweiten reflektierten Ultraschallsignals bestimmt. Die erste und die zweite Amplitude beschreiben insbesondere den Schalldruck des ersten reflektierten Ultraschalls und den Schalldruck des zweiten reflektierten Ultraschallsignals. Darüber hinaus ist es vorgesehen, dass ein erstes Amplitudenverhältnis bestimmt wird, welches das Verhältnis der ersten und der zweiten Amplitude beschreibt.

Des Weiteren ist es vorgesehen, dass ein erstes Luftschalldämpfungsverhältnis bestimmt wird. Dieses erste Luftschalldämpfungsverhältnis beschreibt das Verhältnis der Luftschalldämpfung, die auf das erste Ultraschallsignal wirkt, zu der Luftschalldämpfung, die auf das zweite Ultraschallsignal wirkt. Dieses erste Luftschalldämpfungsverhältnis wird auf Grundlage des ersten Amplitudenverhältnisses bestimmt. Hierbei wird berücksichtigt, dass die Luftschalldämpfung für die erste Frequenz und die zweite Frequenz verschieden ist. Das Amplitudenverhältnis beschreibt das Verhältnis der Schalldrücke der reflektierten Ultraschallsignale und ist somit ein Maß für das Luftschalldämpfungsverhältnis. Ferner wird die Luftfeuchtigkeit bzw. die relative Luftfeuchtigkeit in der Umgebung des Kraftfahrzeugs bestimmt. Dies erfolgt anhand einer ersten Zuordnungsvorschrift, welche das erste Luftschalldämpfungsverhältnis in Abhängigkeit von der Luftfeuchtigkeit beschreibt. Diese erste Zuordnungsvorschrift kann beispielsweise in Form einer Tabelle vorliegen oder anhand einer Formel berechnet werden. Somit kann aus dem bestimmten, ersten Luftschalldämpfungsverhältnis und der ersten Zuordnungsvorschrift die Luftfeuchtigkeit in der Umgebung des Kraftfahrzeugs bestimmt werden. Damit ist es möglich, die Luftfeuchtigkeit bzw. die relative Luftfeuchtigkeit in der Umgebung des Kraftfahrzeugs anhand der Signale des Ultraschallsensors zu bestimmen. Damit ist es nicht notwendig, einen zusätzlichen Sensor zur Bestimmung der Luftfeuchtigkeit zu verwenden. Damit kann die Luftfeuchtigkeit auf kostengünstige Weise und dennoch zuverlässig bestimmt werden.

Bevorzugt wird ein drittes Ultraschallsignal mit einer dritten Frequenz ausgesendet, eine dritte Amplitude des von dem Objekt reflektierten dritten Ultraschallsignals wird bestimmt, ein zweites Amplitudenverhältnis, welches ein Verhältnis der ersten und der dritten Amplitude beschreibt, wird bestimmt, ein zweites Luftschalldämpfungsverhältnis des ersten und des dritten Ultraschallsignals wird bestimmt und die Luftfeuchtigkeit in der Umgebung wird zusätzlich anhand des zweiten Luftschalldämpfungsverhältnisses und einer zweiten Zuordnungsvorschrift, welche das zweite Luftschalldämpfungsverhältnis in Abhängigkeit von der Luftfeuchtigkeit beschreibt, bestimmt. Es kann also vorgesehen sein, dass mit dem Ultraschallsensor drei Ultraschallsignale ausgesendet werden, die jeweils unterschiedliche Frequenzen aufweisen. Zudem können die jeweiligen Amplituden von den drei von dem Objekt reflektierten Ultraschallsignalen bestimmt werden. Anhand der ersten Amplitude und der zweiten Amplitude kann dann ein erstes Amplitudenverhältnis bestimmt werden. Auf Grundlage der ersten Amplitude und der dritten Amplitude kann dann ein zweites Amplitudenverhältnis bestimmt werden. Auf Grundlage des ersten Amplitudenverhältnisses kann dann ein erstes Luftschalldämpfungsverhältnis und auf Grundalge des zweiten Amplitudenverhältnisses kann dann ein zweites Luftschalldämpfungsverhältnis bestimmt werden. Mit dem ersten Luftschalldämpfungsverhältnis kann auf Grundlage der ersten Zuordnungsvorschrift die Luftfeuchtigkeit bestimmt werden. Beispielsweise kann aus der ersten Zuordnungsvorschrift zumindest ein Wert für die Luftfeuchtigkeit abgeleitet werden. Ebenfalls kann auf Grundlage des zweiten Luftschalldämpfungsverhältnisses anhand der zweiten Zuordnungsvorschrift zumindest ein Wert für die Luftfeuchtigkeit bestimmt werden. Die Luftfeuchtigkeit in der Umgebung des Kraftfahrzeugs kann insgesamt anhand der Werte für die Luftfeuchtigkeit bestimmt werden, die wiederum aus der ersten Zuordnungsvorschrift und der zweiten Zuordnungsvorschrift bestimmt wurden. Dem liegt die Erkenntnis zugrunde, dass Zuordnungsvorschriften für die jeweiligen Luftschalldämpfungsverhältnisse auch mehrere Lösungen für die Luftfeuchtigkeit liefern können. Vorliegend werden die Werte bezüglich der Luftfeuchtigkeit, die aus den zwei Zuordnungsvorschriften gewonnen werden, verglichen bzw. plausibilisiert. Somit kann die Luftfeuchtigkeit in der Umgebung des Kraftfahrzeugs zuverlässig bestimmt werden.

In einer weiteren Ausführungsform wird die aktuelle Temperatur in der Umgebung bestimmt und die erste Zuordnungsvorschrift beschreibt zusätzlich das erste Luftschalldämpfungsverhältnis in Abhängigkeit von der Temperatur. Falls ein drittes Ultraschallsignal ausgesendet wird und ein zweites Luftschalldämpfungsverhältnis bestimmt wird, kann es ebenfalls vorgesehen sein, dass die zweite Zuordnungsvorschrift zusätzlich das zweite Luftschalldämpfungsverhältnis in Abhängigkeit von der Temperatur beschreibt. Die Zuordnungsvorschriften können also die jeweiligen Luftschalldämpfungsverhältnisse in Abhängigkeit von der Luftfeuchtigkeit und der Temperatur beschreiben. Auf Grundlage dieser Zuordnungsvorschriften kann dann die Luftfeuchtigkeit in der Umgebung des Kraftfahrzeugs bestimmt werden. Hierbei wird berücksichtigt, dass die Temperatur in der Umgebung des Kraftfahrzeugs eine deutliche Auswirkung auf die Luftschalldämpfung hat. Somit kann die Luftfeuchtigkeit in der Umgebung zusätzlich anhand der Temperatur bestimmt werden.

Weiterhin ist es vorteilhaft, wenn das erste Luftschalldämpfungsverhältnis zusätzlich anhand einer jeweiligen Richtcharakteristik des ausgesendeten ersten Ultraschallsignals und des ausgesendeten zweiten Ultraschallsignals bestimmt wird. Falls ein drittes Ultraschallsignal ausgesendet wird und ein zweites Luftschalldämpfungsverhältnis bestimmt wird, kann es vorgesehen sein, dass das zweite Luftschalldämpfungsverhältnis zusätzlich anhand einer jeweiligen Richtcharakteristik des ausgesendeten ersten Ultraschallsignals und des ausgesendeten dritten Ultraschallsignals bestimmt wird. Die jeweilige Richtcharakteristik der Ultraschallsignale beschreibt die Stärke der ausgesendeten Ultraschallsignale in Abhängigkeit vom Raumwinkel. Da die Ultraschallsignale unterschiedliche Frequenzen aufweisen ergeben sich auch unterschiedliche Richtcharakteristika. Auf diese Weise können die Luftschalldämpfungsverhältnisse zuverlässiger und präziser bestimmt werden.

In einer weiteren Ausgestaltung wird anhand des reflektierten ersten Ultraschallsignals und/oder des reflektierten zweiten Ultraschallsignals eine relative Lage des Ultraschallsensors zu dem Objekt bestimmt und das erste Luftschalldämpfungsverhältnis wird zusätzlich anhand der relativen Lage bestimmt. Falls ein drittes Ultraschallsignal ausgesendet wird, kann die relative Lage des Ultraschallsensors zu dem Objekt zusätzlich oder alternativ anhand des reflektierten dritten Ultraschallsignals bestimmt werden. Die relative Lage zwischen dem Ultraschallsensor und dem Objekt kann beispielsweise auf Grundalge von Triangulation bestimmt werden. Es kann auch vorgesehen sein, dass mehrere Ultraschallsensoren vorgesehen sind, welche das Objekt erfassen. Es kann auch vorgesehen sein, dass das Objekt mit weiteren Sensoren des Fahrerassistenzsystems bzw. des Kraftfahrzeugs erfasst wird. Die weiteren Sensoren können beispielsweise Laserscanner, Lidar-Sensoren, Radarsensoren, Kameras oder dergleichen sein. Die Sensorsignale der Sensoren können fusioniert werden, um die Position des Objekts und die relative Lage zwischen dem Kraftfahrzeug und dem Objekt präzise bestimmen zu können. Somit können einerseits der Abstand zu dem Objekt sowie der Winkel zu dem Objekt bestimmt werden. Somit kann insbesondere bestimmt werden, wo sich das Objekt bezüglich der jeweiligen Richtcharakteristik des Ultraschallsignals befindet. Beispielsweise kann unterschieden werden, ob das Objekt in einem Bereich der Hauptsenderichtung oder beabstandet dazu angeordnet ist. Wenn sich das Objekt außerhalb der Hauptsenderichtung befindet, wird das jeweilige Ultraschallsignal im Vergleich zur Hauptsenderichtung mit einem anderen Signalpegel, beispielsweise einem geringeren oder höheren Signalpegel, ausgesendet. Dies kann bei der Bestimmung der jeweiligen Luftschalldämpfungsverhältnisse berücksichtigt werden. Somit kann die Luftfeuchtigkeit insgesamt sehr genau und zuverlässig bestimmt werden.

In einer weiteren Ausführungsform wird das erste Luftschalldämpfungsverhältnis zusätzlich anhand eines jeweiligen Sendeschalldrucks des ausgesendeten ersten Ultraschallsignals und des ausgesendeten zweiten Ultraschallsignals bestimmt. Falls ein drittes Ultraschallsignal ausgesendet wird, kann es zudem vorgesehen sein, dass das zweite Luftschalldämpfungsverhältnis zusätzlich anhand des jeweiligen Sendeschalldrucks des ausgesendeten ersten Ultraschallsignals und des ausgesendeten dritten Ultraschallsignals bestimmt wird. Auch hier wird berücksichtigt, dass sich der Sendeschalldruck in Abhängigkeit von der Frequenz des Ultraschallsignals ändert. Der Sendeschalldruck hat zudem Einfluss auf die Amplitude des jeweiligen reflektierten Ultraschallsignals. Dies ermöglicht eine genaue Bestimmung des Luftschalldämpfungsverhältnisses und somit auch der Luftfeuchtigkeit in der Umgebung des Kraftfahrzeugs.

Bevorzugt wird ein aktueller Luftdruck in der Umgebung des Kraftfahrzeugs bestimmt und die Luftfeuchtigkeit wird anhand des aktuellen Luftdrucks bestimmt. Hier wird berücksichtigt, dass der aktuelle Luftdruck bzw. Atmosphärendruck deutliche Auswirkungen auf die Luftschalldämpfung hat. Der aktuelle Atmosphärendruck in der Umgebung des Kraftfahrzeugs kann mit einem entsprechenden Sensor des Kraftfahrzeugs bestimmt werden. Bevorzugt ist es vorgesehen, dass entsprechende Wetterinformationen bzw. Informationen von Wetterdiensten empfangen werden, welche den aktuellen Atmosphärendruck beschreiben. Anhand des aktuellen Atmosphärendrucks kann dann die Luftschalldämpfung bzw. das Luftschalldämpfungsverhältnis bestimmt werden. Hieraus kann dann die Luftfeuchtigkeit abgeleitet werden. Ferner kann die aktuelle Temperatur in der Umgebung des Kraftfahrzeugs herangezogen werden, um die Luftschalldämpfung zu bestimmen. Auch hier kann es vorgesehen sein, dass die aktuelle Luftschalldämpfung in Abhängigkeit von der bestimmten Luftfeuchtigkeit und/oder der bestimmten Temperatur anhand einer Tabelle oder einer Formel ermittelt wird. Die aktuelle Luftschalldämpfung kann dann im weiteren Betrieb des Ultraschallsensors, bei dem beispielsweise Objekte oder Hindernisse in der Umgebung erfasst werden, berücksichtigt werden.

Es kann auch vorgesehen sein, dass Informationen von Wetterdiensten empfangen werden und bei der Bestimmung der Luftfeuchtigkeit in der Umgebung herangezogen werden. Es kann auch vorgesehen sein, dass Niederschlag oder Regen in der Umgebung des Kraftfahrzeugs erkannt wird. Hierzu kann ein Regensensor verwendet werden. Des Weiteren kann ein Sensor, beispielsweise eine Kamera, verwendet werden, mittels welchem erkannt werden kann, dass die Fahrbahn nass ist. Der Niederschlag kann auch von Sensoren anderer Fahrzeug erkannt werden und die Informationen über den Niederschlag können beispielsweise über Fahrzeug-zu-Fahrzeug-Kommunikation an das Kraftfahrzeug übertragen werden. Dies ermöglicht eine zuverlässige Bestimmung der Luftfeuchtigkeit in der Umgebung des Kraftfahrzeugs.

In einer Ausführungsform wird der Ultraschallsensor zum Bestimmen der Luftfeuchtigkeit in einem ersten Betriebsmodus betrieben und nach dem Bestimmen der Luftfeuchtigkeit wird der Ultraschallsensor in einem zweiten Betriebsmodus betrieben. Es kann beispielsweise vorgesehen sein, dass der Ultraschallsensor nach dem Starten des Kraftfahrzeugs im ersten Betriebsmodus betrieben wird. In dem ersten Betriebsmodus kann dann die relative Luftfeuchtigkeit in der Umgebung bzw. die Luftschalldämpfung bestimmt werden. Im Anschluss daran kann der Ultraschallsensor in einen zweiten Betriebsmodus überführt werden, in welchem dann Objekte bzw. Hindernisse in der Umgebung erkannt werden können bzw. der Abstand zu den Objekten ermittelt werden kann.

Bevorzugt wird der Ultraschallsensor in dem ersten Betriebsmodus im Vergleich zu dem zweiten Betriebsmodus mit einer höheren Empfindlichkeit betrieben. Beispielsweise kann in dem ersten Betriebsmodus eine Schwelle herabgesetzt werden. Diese Schwelle kann beispielsweise bezüglich der Amplituden der reflektierten Ultraschallsignale herangezogen werden. Falls die Amplituden den Schwellenwert überschreiten werden diese berücksichtigt. Dies ermöglicht eine zuverlässige Bestimmung der Luftfeuchtigkeit bzw. der Luftschalldämpfung. In dem zweiten Betriebsmodus bzw. im Normalbetrieb kann dann die Schwelle wieder erhöht werden.

Das Objekt, von welchem die Ultraschallsignale reflektiert werden, kann auch der Boden bzw. die Fahrbahnoberfläche sein, auf welchem bzw. auf welcher sich das Kraftfahrzeug aktuell befindet. Auf diese Weise können Reflexionen der Ultraschallsignale am Boden bzw. sogenannte Bodenechos genutzt werden, um die Luftfeuchtigkeit in der Umgebung des Kraftfahrzeugs zu bestimmen. Dies ermöglicht die Bestimmung der Luftfeuchtigkeit mit Hilfe des Ultraschallsensors, auch wenn sich kein Objekt in Form eines Hindernisses in der Umgebung des Kraftfahrzeugs befindet.

Weiterhin ist es vorteilhaft, wenn der Ultraschallsensor in dem zweiten Betriebsmodus in Abhängigkeit von der bestimmten Luftfeuchtigkeit betrieben wird. Es kann auch vorgesehen sein, dass der Ultraschallsensor in dem zweiten Betriebsmodus in Abhängigkeit von der bestimmten Luftschalldämpfung betrieben wird. Hier kann es beispielsweise vorgesehen sein, dass die Empfindlichkeit des Ultraschallsensors an die bestimmte Luftfeuchtigkeit in der Umgebung angepasst wird. Dies ermöglicht einen sicheren und zuverlässigen Betrieb des Ultraschallsensors in Abhängigkeit von der jeweiligen Umgebungsbedingung.

Ein erfindungsgemäßes Fahrerassistenzsystem für ein Kraftfahrzeug umfasst eine Steuereinrichtung und zumindest einen Ultraschallsensor. Zudem ist das Fahrerassistenzsystem dazu ausgelegt, ein erfindungsgemäßes Verfahren oder Weiterbildungen davon durchzuführen. Die Steuereinrichtung kann beispielsweise durch ein elektronisches Steuergerät des Kraftfahrzeugs gebildet sein. Dieses Steuergerät kann zur Datenübertragung mit dem zumindest einen Ultraschallsensor verbunden sein. Es kann auch vorgesehen sein, dass das Fahrerassistenzsystem eine Mehrzahl von Ultraschallsensoren aufweist.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:

Fig. 1    ein Kraftfahrzeug gemäß einer Ausführungsform der vorliegenden Erfindung, welches ein Fahrerassistenzsystem mit einer Mehrzahl von Ultraschallsensoren aufweist;

Fig. 2    ein Objekt, welches mit Hilfe der Ultraschallsensoren erfasst wird;

Fig. 3    eine weitere Darstellung des Objekts, welches mit den Ultraschallsensoren erfasst wird; und

Fig. 4    Graphen, welche jeweils Luftschalldämpfungsverhältnisse in Abhängigkeit von der Temperatur und der Luftfeuchtigkeit beschreiben.

In den Figuren werden gleiche und funktionsgleiche Elemente mit den gleichen Bezugszeichen versehen.

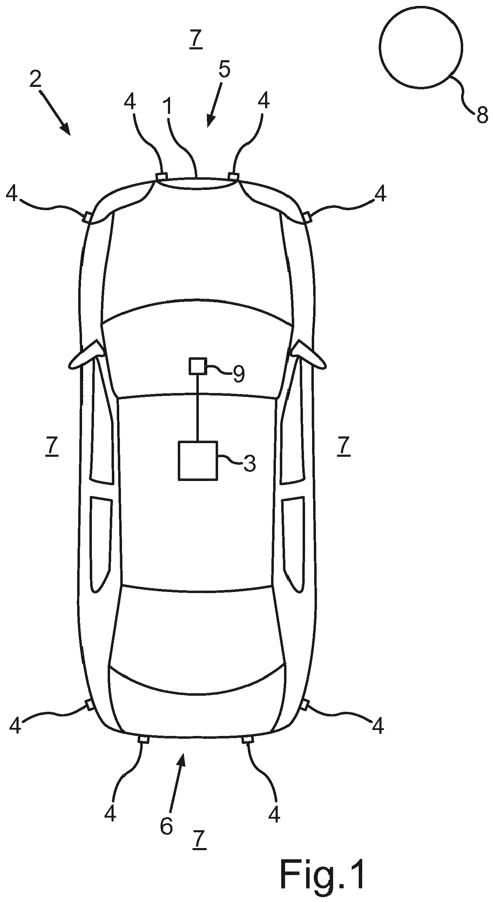

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, die beispielsweise durch ein elektronisches Steuergerät (ECU - Electronic Control Unit) des Kraftfahrzeugs 1 gebildet sein kann.

Darüber hinaus umfasst das Fahrerassistenzsystem 2 eine Mehrzahl von Ultraschallsensoren 4. Vorliegend umfasst das Fahrerassistenzsystem 2 acht Ultraschallsensoren 4, von denen vier Ultraschallsensoren 4 in einem Frontbereich 5 des Kraftfahrzeugs 1 und vier Ultraschallsensoren 4 in einem Heckbereich 6 des Kraftfahrzeugs 1 angeordnet sind. Die Ultraschallsensoren 4 können beispielsweise an oder in den Stoßfängern des Kraftfahrzeugs 1 angeordnet sein. Die jeweiligen Ultraschallsensoren 4 sind zur Datenübertragung mit der Steuereinrichtung 3 verbunden. Entsprechende Datenleitungen sind vorliegend der Übersichtlichkeit halber nicht dargestellt. Mit den Ultraschallsensoren 4 kann ein Objekt 8 in einer Umgebung 7 des Kraftfahrzeugs 1 erfasst werden. Darüber hinaus umfasst das Fahrerassistenzsystem 2 einen Temperatursensor 9, mit dem die Temperatur in der Umgebung 7 des Kraftfahrzeugs 1 bestimmt werden kann.

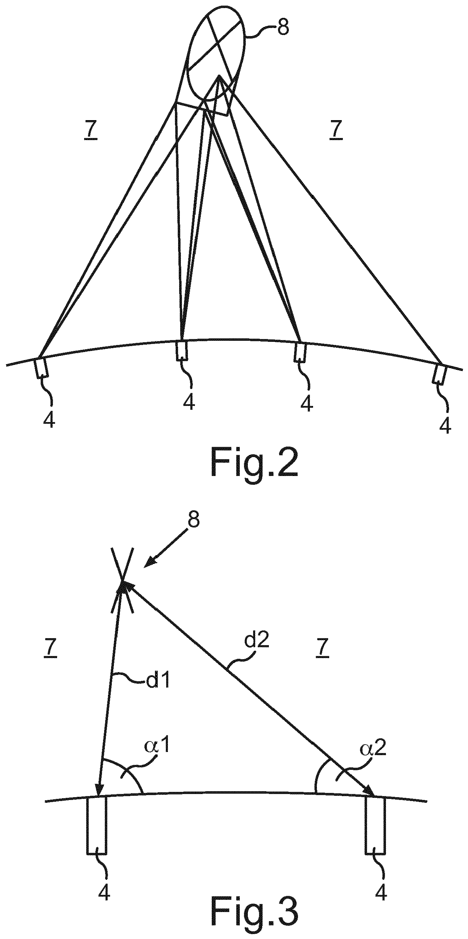

Mit Hilfe der Ultraschallsensoren 4 kann das Objekt 8 in der Umgebung 7 des Kraftfahrzeugs 1 erfasst werden. Dies ist schematisch in Fig. 2 dargestellt. Vorliegend sendet jeder der Ultraschallsensoren 4 ein Ultraschallsignal aus. Die jeweiligen Ultraschallsignale treffen auf das Objekt 8 und werden von diesem reflektiert. Die reflektierten Ultraschallsignale können dann wieder mit den Ultraschallsensoren 4 empfangen werden. Vorliegend ist es vorgesehen, dass eine indirekte Messung durchgeführt wird. Dies bedeutet, dass mit einem Ultraschallsensor ein Signal ausgesendet und mit einem benachbarten Ultraschallsensor 4 das von dem Objekt 8 reflektierte Ultraschallsignal empfangen wird. Auf diese Weise kann die relative Lage des Objekts 8 zu dem Kraftfahrzeug bzw. zu den jeweiligen Ultraschallsensoren 4 bestimmt werden.

Fig. 3 zeigt eine weitere Darstellung einer Erfassung eines Objekts 8 in der Umgebung 7 des Kraftfahrzeugs 1. Auf Grundlage der ausgesendeten und empfangenen Ultraschallsignale kann einerseits ein Abstand d1, d2 zwischen den jeweiligen Ultraschallsensoren 4 und dem Objekt 8 und andererseits Winkel $\alpha$1, $\alpha$2 zwischen den jeweiligen Ultraschallsensoren 4 und dem Objekt 8 bestimmt werden. Zudem kann es vorgesehen sein, dass die relative Lage des Kraftfahrzeugs 1 bzw. der Ultraschallsensoren 4 zu dem Objekt auf Grundlage von Triangulation bestimmt wird.

Auf Grundalge der Messungen, die mit den Ultraschallsensoren 4 durchgeführt werden, soll zudem die relative Luftfeuchtigkeit $\varphi$ in der Umgebung 7 des Kraftfahrzeugs 1 bestimmt werden. Hierzu wird mit den jeweiligen Ultraschallsensoren 4 zunächst ein erstes Ultraschallsignal ausgesendet, welches eine erste Frequenz aufweist. Anschließend daran wird das von dem Objekt 8 reflektierte erste Ultraschallsignal empfangen. Zudem wird ein zweites Ultraschallsignal mit einer zweiten Frequenz ausgesendet und das von dem Objekt 8 reflektierte zweite Ultraschallsignal empfangen. Zudem ist es vorgesehen, dass ein drittes Ultraschallsignal mit einer dritten Frequenz ausgesendet wird und das von dem Objekt 8 reflektierte dritte Ultraschallsignal empfangen wird. Des Weiteren wird eine erste Amplitude des reflektierten ersten Ultraschallsignals, eine zweite Amplitude des zweiten reflektierten Ultraschallsignals und eine dritte Amplitude des dritten reflektierten Ultraschallsignals bestimmt. Des Weiteren ist es vorgesehen, dass ein erstes Amplitudenverhältnis, welches das Verhältnis der ersten Amplitude und der zweiten Amplitude beschreibt, bestimmt wird. Darüber hinaus wird ein zweites Amplitudenverhältnis, welches ein Verhältnis der ersten Amplitude und der dritten Amplitude beschreibt, bestimmt.

Des Weiteren wird der jeweilige Sendeschalldruck des ausgesendeten ersten Ultraschallsignals, des ausgesendeten zweiten Ultraschallsignals und des ausgesendeten dritten Ultraschallsignals ermittelt. Dieser kann beispielsweise in einem Speicher der Steuereinrichtung 3 hinterlegt sein. Ebenso können die jeweiligen Richtcharakteristika des ausgesendeten ersten Ultraschallsignals, des ausgesendeten zweiten Ultraschallsignals und des ausgesendeten dritten Ultraschallsignals bestimmt werden. Diese können ebenfalls in dem Speicher der Steuereinheit 3 hinterlegt sein. Darüber hinaus können die jeweiligen Objektreflexionen anhand des reflektierten ersten Ultraschallsignals, des reflektierten zweiten Ultraschallsignals und des reflektierten dritten Ultraschallsignals bestimmt werden. Die Objektreflexionen können die relative Lage des Objekts 8 zu dem Ultraschallsensor 4 beschreiben.

Somit können für die erste Messung, bei welcher das erste Ultraschallsignal ausgesendet und empfangen wird, eine erste Amplitude A1 bestimmt werden. Diese kann wie folgt bestimmt werden:

$$A1 = Sendeschalldruck1 * Richtcharakteristik1 * Luftschalldämpfung\ L1 * Objektreflexion\ .$$

Zudem kann die zweite Amplitude A2 für die zweite Messung bestimmt werden, bei welcher das zweite Ultraschallsignal ausgesendet wird und das reflektierte zweite Ultraschallsignal empfangen wird:

$$A2 = Sendeschalldruck\,2 * Richtcharakteristik\,2 * Luftschalldämpfung\;L2 * Objektreflexion\,.$$

Schließlich kann die dritte Amplitude A3 für die dritte Messung bestimmt werden, bei welcher das dritte Ultraschallsignals ausgesendet wird und das dritte reflektierte Ultraschallsignal empfangen wird:

$$A3 = Sendeschalldruck\,3 * Richtcharakteristik\,3 * Luftschalldämpfung\;L3 * Objektreflexion\,.$$

Hierbei kann es zudem vorgesehen sein, dass bei der Bestimmung der ersten Amplitude A1, der zweiten Amplitude A2 und der dritten Amplitude A3 jeweils die Raumdämpfung berücksichtigt wird.
Somit kann das erste Amplitudenverhältnis auf Grundlage der ersten Amplitude A1 und der zweiten Amplitude A2 bestimmt werden:

$$\frac{A1}{A2} = \frac{Sendeschalldruck\,1 * Richtcharakteristik\,1 * Luftschalldämpfung\;L1 * Objektreflexion}{Sendeschalldruck\,2 * Richtcharakteristik\,2 * Luftschalldämrpfung\;L2 * Objektreflexion}.$$

Die Objektreflexion ist gleich und kann daher herausgekürzt werden. Damit ergibt sich als erstes Luftschalldämpfungsverhältnis L1/L2:

$$\frac{L1}{L2} = \frac{A1 * Sendeschalldruck\,2 * Richtcharakteristik\,2}{A2 * Sendeschalldruck\,1 * Richtcharakteristik\,1}.$$

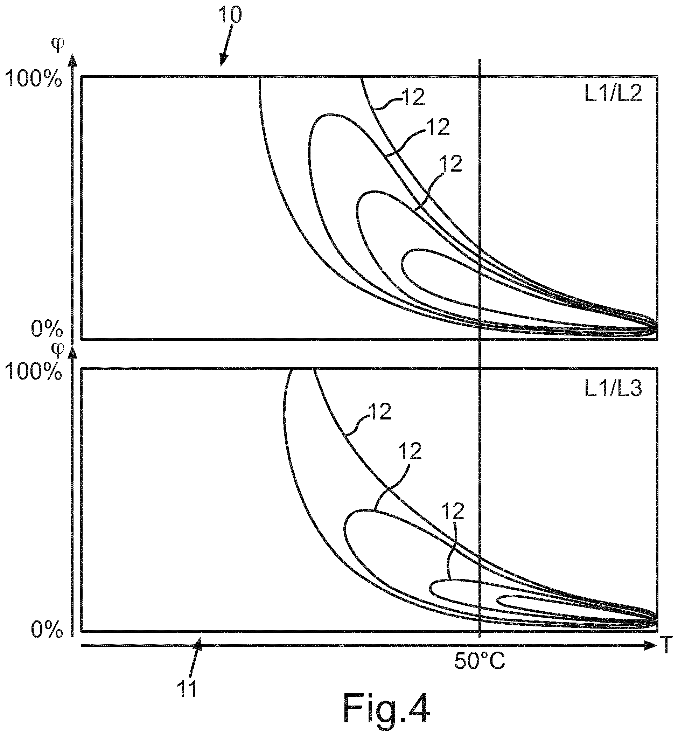

Zum Bestimmen der Luftfeuchtigkeit φ auf Grundlage des ersten Luftschalldämpfungsverhältnisses L1/L2 wird eine erste Zuordnungsvorschrift verwendet. Diese ist vorliegend durch den ersten Graph 10, welcher in Fig. 4 dargestellt ist, gebildet. Bei dem Graph 10 auf der Abszisse eine Temperatur T und auf der Ordinate die relative Luftfeuchtigkeit φ dargestellt. Die jeweiligen Kurven 12 beschreiben jeweilige Luftschalldämpfungsverhältnisse L1/L2.
Zudem wird die aktuelle Temperatur T in der Umgebung 7 des Kraftfahrzeugs mit Hilfe des Temperatursensors 9 bestimmt. Bei dem vorliegenden Beispiel beträgt die Temperatur T 50 °C. Anhand der ersten Abbildungsvor schrift bzw. des ersten Graphs 10 ergeben sich für das bestimmte erste Luftschalldämpfungsverhältnis L1/L2 bei dieser Temperatur T zwei Werte für die relative Luftfeuchtigkeit φ, nämlich 10 % und 30 %.
Des Weiteren wird ein zweites Luftschalldämpfungsverhältnis L1/L3 bestimmt:

$$\frac{L1}{L3} = \frac{A1 * Sendeschalldruck\,3 * Richtcharakteristik\,3}{A3 * Sendeschalldruck\,1 * Richtcharakteristik\,1}.$$

Für das bestimmte zweite Luftschalldämpfungsverhältnis L1/L3 ergibt sich anhand einer zweiten Abbildungsvorschrift bzw. des zweiten Graphs 11 aus Fig. 4 auch zwei Werte für die relative Luftfeuchtigkeit φ, nämlich 10 % und 20 %.
Anhand der Luftfeuchtigkeit φ, die auf Grundlage der ersten Abbildungsvorschrift bzw. des ersten Graphs 10 bestimmt wurde und der Luftfeuchtigkeit φ, die auf Grundlage der zweiten Abbildungsvorschrift bzw. des zweiten Graphs 11 bestimmt wurde, ergibt sich insgesamt eine Übereinstimmung bei einer relativen Luftfeuchtigkeit φ von 10 %. Auf diese Weise kann die Luftfeuchtigkeit φ in der Umgebung 7 des Kraftfahrzeugs zuverlässig bestimmt werden.
In einem zweiten Betriebsmodus bzw. im Normalbetrieb der Ultraschallsensoren 4 können die Ultraschallsensoren 4 in Abhängigkeit von der bestimmten relativen Luftfeuchtigkeit φ bzw. der Luftschalldämpfung betrieben werden. Beispielsweise kann die Empfindlichkeit der Ultraschallsensoren 4 an die Luftfeuchtigkeit φ bzw. die Luftschalldämpfung angepasst werden. Auf diese Weise können Objekte 8 in der Umgebung 7 des Kraftfahrzeugs 1 unabhängig von den Umgebungsbedingungen sicher und zuverlässig erfasst werden.

**Patentansprüche**

**1.** Verfahren zum Betreiben eines Ultraschallsensors (4) eines Kraftfahrzeugs (1), mit den Schritten:

- Aussenden eines ersten Ultraschallsignals mit einer ersten Frequenz und eines zweiten Ultraschallsignals mit einer zweiten Frequenz,
- Bestimmen einer ersten Amplitude des von einem Objekt (8) in einer Umgebung (7) des Kraftfahrzeugs (1) reflektierten ersten Ultraschallsignals und einer zweiten Amplitude des von dem Objekt reflektierten zweiten Ultraschallsignals,
- Bestimmen eines ersten Amplitudenverhältnisses, welches ein Verhältnis der ersten Amplitude und der zweiten Amplitude beschreibt,
- Bestimmen eines ersten Luftschalldämpfungsverhältnisses (L1/L2) des ersten und des zweiten Ultraschallsignals anhand des ersten Amplitudenverhältnisses und
- Bestimmen einer Luftfeuchtigkeit ($\varphi$) in der Umgebung (7) des Kraftfahrzeugs (1) anhand des ersten Luftschalldämpfungsverhältnisses (L1/L2) und einer ersten Zuordnungsvorschrift, welche das erste Luftschalldämpfungsverhältnis (L1/L2) in Abhängigkeit von der Luftfeuchtigkeit ($\varphi$) beschreibt.

2. Verfahren nach Anspruch 1,
**dadurch gekennzeichnet, dass**
ein drittes Ultraschallsignal mit einer dritten Frequenz ausgesendet wird, eine dritte Amplitude des von dem Objekt (8) reflektierten dritten Ultraschallsignals bestimmt wird, ein zweites Amplitudenverhältnis, welches ein Verhältnis der ersten und der dritten Amplitude beschreibt, bestimmt wird, ein zweites Luftschalldämpfungsverhältnis (L1/L3) des ersten und des dritten Ultraschallsignals bestimmt wird und die Luftfeuchtigkeit ($\varphi$) in der Umgebung (7) zusätzlich anhand des zweiten Luftschalldämpfungsverhältnisses (L1/L3) und einer zweiten Zuordnungsvorschrift, welche das zweite Luftschalldämpfungsverhältnis (L1/L3) in Abhängigkeit von der Luftfeuchtigkeit ($\varphi$) beschreibt, bestimmt.

3. Verfahren nach Anspruch 1 oder 2,
**dadurch gekennzeichnet, dass**
eine aktuelle Temperatur (T) in der Umgebung (7) bestimmt wird und die erste Zuordnungsvorschrift zusätzlich das erste Luftschalldämpfungsverhältnis (L1/L2) in Abhängigkeit von der Temperatur (T) beschreibt.

4. Verfahren nach einem der vorhergehenden Ansprüche,
**dadurch gekennzeichnet, dass**
das erste Luftschalldämpfungsverhältnis (L1/L2) zusätzlich anhand einer jeweiligen Richtcharakteristik des ausgesendeten ersten Ultraschallsignal und des ausgesendeten zweiten Ultraschallsignals bestimmt wird.

5. Verfahren nach einem der vorhergehenden Ansprüche,
**dadurch gekennzeichnet, dass**
anhand des reflektierten ersten Ultraschallsignals und/oder des reflektierten zweiten Ultraschallsignals eine relative Lage des Ultraschallsensors (4) zu dem Objekt (8) bestimmt wird und das erste Luftschalldämpfungsverhältnis (L1/L2) zusätzlich anhand der relativen Lage bestimmt wird.

6. Verfahren nach einem der vorhergehenden Ansprüche,
**dadurch gekennzeichnet, dass**
das erste Luftschalldämpfungsverhältnis (L1/L2) zusätzlich anhand eines jeweiligen Sendeschalldrucks des ausgesendeten ersten Ultraschallsignal und des ausgesendeten zweiten Ultraschallsignals bestimmt wird.

7. Verfahren nach einem der vorhergehenden Ansprüche,
**dadurch gekennzeichnet, dass**
ein aktueller Luftdruck in der Umgebung (7) des Kraftfahrzeugs (1) bestimmt wird und die Luftfeuchtigkeit ($\varphi$) in Abhängigkeit von dem aktuellen Luftdruck bestimmt wird.

8. Verfahren nach einem der vorhergehenden Ansprüche,
**dadurch gekennzeichnet, dass**
der Ultraschallsensor (4) zum Bestimmen der Luftfeuchtigkeit ($\varphi$) in einem ersten Betriebsmodus betreiben wird und nach dem Bestimmen der Luftfeuchtigkeit ($\varphi$) in einem zweiten Betriebsmodus betrieben wird.

9. Verfahren nach Anspruch 8,
**dadurch gekennzeichnet, dass**
der Ultraschallsensor (4) in dem ersten Betriebsmodus im Vergleich zu dem zweiten Betriebsmodus mit einer höheren Empfindlichkeit betrieben wird.

10. Verfahren nach Anspruch 8 oder 9,

**dadurch gekennzeichnet, dass**
der Ultraschallsensor (4) in dem zweiten Betriebsmodus in Abhängigkeit von der bestimmten Luftfeuchtigkeit (φ) betrieben wird.

11. Fahrerassistenzsystem (2) für ein Kraftfahrzeug (1) mit einer Steuereinrichtung (3) und mit zumindest einem Ultraschallsensor (4), wobei das Fahrerassistenzsystem (2) zum Durchführen eines Verfahrens nach einem der vorhergehenden Ansprüche ausgelegt ist.

12. Kraftfahrzeug (1) mit einem Fahrerassistenzsystem (2) nach Anspruch 11.

Fig.1

Fig.2

Fig.3

Fig.4

Europäisches
Patentamt

European
Patent Office

Office européen
des brevets

# EUROPÄISCHER RECHERCHENBERICHT

**Nummer der Anmeldung**

EP 17 15 7563

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2009 017507 A1 (DENSO CORP [JP]; NIPPON SOKEN [JP]) 5. November 2009 (2009-11-05) * Absätze [0057] - [0069] * ----- | 1-12 | INV. G01S15/93 G01S7/52 G01S15/87 G01S15/10 |
| X | DE 10 2006 005048 A1 (DENSO CORP [JP]) 7. September 2006 (2006-09-07) * Absätze [0058] - [0063] * ----- | 1-12 | G01S15/88 G01S15/46 |
| X | DE 10 2006 033693 A1 (DENSO CORP [JP]) 8. Februar 2007 (2007-02-08) * Absätze [0061] - [0066] * ----- | 1-12 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 24. August 2017 | Schmelz, Christian |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 15 7563

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-08-2017

| Im Recherchenbericht angeführtes Patentdokument | Datum der Veröffentlichung | Mitglied(er) der Patentfamilie | Datum der Veröffentlichung |
|---|---|---|---|
| DE 102009017507 A1 | 05-11-2009 | DE 102009017507 A1<br>DE 102009061087 B3<br>US 2009260422 A1<br>US 2012174673 A1 | 05-11-2009<br>14-06-2012<br>22-10-2009<br>12-07-2012 |
| DE 102006005048 A1 | 07-09-2006 | CN 1829395 A<br>DE 102006005048 A1<br>FR 2882825 A1<br>JP 4715236 B2<br>JP 2006242650 A<br>US 2006196272 A1<br>US 2009107243 A1 | 06-09-2006<br>07-09-2006<br>08-09-2006<br>06-07-2011<br>14-09-2006<br>07-09-2006<br>30-04-2009 |
| DE 102006033693 A1 | 08-02-2007 | DE 102006033693 A1<br>FR 2888943 A1<br>JP 2007024770 A<br>US 2008165620 A1 | 08-02-2007<br>26-01-2007<br>01-02-2007<br>10-07-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102008054047 A1